# EUROPEAN PATENT APPLICATION

(11) **EP 4 464 676 A1**
(43) Date of publication of application: **20.11.2024**
(21) Application number: 22920519.0
(22) Date of filing: 08.12.2022
(51) Int. Cl.: C03C 17/34, C03C 21/00, G09F 9/00

(54) **GLASS ARTICLE WITH EASY-TO-CLEAN COATING**

(30) Priority: 13.01.2022 JP 2022003786
(71) Applicant: Nippon Sheet Glass Company, Limited, Tokyo 108-6321 (JP)
(72) Inventor: KAWAZU, Mitsuhiro, Tokyo 108-6321 (JP); IIDA, Genichiro, Tokyo 108-6321 (JP)
(74) Representative: Hope, Adam John
(86) International application number: PCT/JP2022/045379
(87) International publication number: WO 2023/135999

(57) **Abstract**

Provided is a coating-attached glass article including: a glass substrate; and an easy-to-clean coating on the glass substrate, wherein the coating includes zirconium oxide, and a contact angle of water on a surface of the coating is 60° or more and 130° or less. For the glass article, an absolute value of a difference between visible transmittances is 0.7% or less, the visible transmittances being determined before and after an abrasion resistance test performed for the coating in accordance with an abrasion resistance test in EN 1096-2: 2001 under a condition of 500 strokes except that Grade No. 0000 steel wool is used instead of a felt pad.

## Description

### TECHNICAL FIELD

The present invention relates to an easy-to-clean-coating-attached glass article.

### BACKGROUND ART

Films called easy-to-clean coatings are sometimes formed on surfaces of various substrates. The easy-to-clean coatings make it easy to remove dirt adhered to the surfaces of the substrates. Easy-to-clean coatings typically include a fluorine-containing organic compound. A representative substrate on which an easy-to-clean coating is formed is a glass substrate. For example, a commercially-available coating liquid containing a fluoroalkyl-containing silicon alkoxide is applied onto a surface of a glass substrate to form an easy-to-clean coating.

Patent Literature 1 discloses a technique for providing an adhesion promoter layer between a glass substrate and an easy-to-clean coating. The adhesion promoter layer is specifically a silicon mixed oxide layer and makes easy-to-clean properties last longer.

### CITATION LIST

### Patent Literature

Patent Literature 1: JP 2014-522433 A

### SUMMARY OF INVENTION

### Technical Problem

As disclosed in Patent Literature 1, an easy-to-clean coating reducing adhesion of dirt using a fluorine-containing organic compound requires, between the easy-to-clean coating and a glass substrate, a layer promoting adhesion so as to make the effect, particularly the abrasion resistance, of the coating last long enough for the coating to be practically useful.

The present invention aims to provide a coating-attached glass article including an easy-to-clean coating having an improved abrasion resistance.

### Solution to Problem

The present invention provides a coating-attached glass article, including:
a glass substrate; and
an easy-to-clean coating on the glass substrate, wherein
the coating includes zirconium oxide, and
a contact angle of water on a surface of the coating is 60° or more and 130° or less.

### Advantageous Effects of Invention

The present invention provides a coating-attached glass article having an improved abrasion resistance.

### BRIEF DESCRIPTION OF DRAWINGS

FIG. 1 is a schematic cross-sectional view illustrating progress of evaporation of a water drop on a hydrophilic surface.
FIG. 2 is a schematic cross-sectional view illustrating progress of evaporation of a water drop on a surface to which water repellency is imparted by a fluorine-containing organic compound.
FIG. 3 shows the result of scanning electron microscope (SEM) observation of a coating-attached glass article produced in Example 1.
FIG. 4 shows the result of SEM observation of a coating-attached glass article produced in Comparative Example 1.

### DESCRIPTION OF EMBODIMENTS

The following description of embodiments of the present invention is not intended to limit the present invention to specific embodiments. The term "main component" as used herein means a component whose content is 50% or more, particularly 60% or more, on a mass basis. The phrase "substantially free" means that the content of a component is less than 1 % or even less than 0.1 % on a mass basis. The phrase "substantially flat" means that when a surface is observed using a scanning electron microscope (SEM), no irregularities having a height or depth of 500 nm or more are confirmed on the surface. The term "ordinary temperature" is used as a term that means a temperature in the range of 5 to 35°C, particularly 10 to 30°C.

A coating-attached glass article provided by the present embodiment includes:
a glass substrate; and
an easy-to-clean coating on the glass substrate, wherein
the coating includes zirconium oxide, and
a contact angle of water on a surface of the coating is 60° or more and 130° or less.

It has been found out that zirconium oxide is useful as a component of an easy-to-clean coating having a good abrasion resistance. Zirconium oxide has better heat resistance than a fluorine-containing organic compound. Moreover, the easy-to-clean coating of the present embodiment can have properties allowing easy removal of dirt.

It has been assumed that the magnitude of the water contact angle is a measure of the easy-to-clean properties of easy-to-clean coatings. Because of this, coating materials that have been used are organic materials typified by a fluorine-containing organic compound and capable of achieving a high contact angle. However, actually, water drops adhered to a surface to which water repellency is imparted by a fluorine-containing organic compound are likely to leave spots of dirt on the surface when evaporate. This dirt is formed of fine particles or a solute having been contained in the adhered water drops and collecting in a small region of a spot-like shape. Uneven distribution of dirt is often observed also on a glass surface on which no coating is arranged. Ring-shaped dirt left on a hydrophilic glass surface is sometimes called "coffee ring". Dirt left as a result of concentration in a spot-like or ring shape is noticeable, and removal of such dirt may be difficult depending on the degree of the concentration.

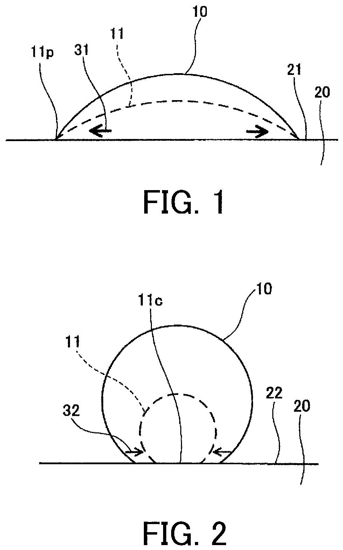

How ring-shaped dirt is left can be understood from FIG. 1. A water drop 10 adhered to a hydrophilic surface 21 of a glass substrate 20 shrinks with the progress of moisture evaporation and disappears in the end. During the progress of the evaporation, the water drop 10 tends to shrink while keeping the area of contact with the hydrophilic surface 21. Accordingly, the water drop 10 more greatly shrinks at a center than at an edge. Inside a shrinking water drop 11, the shrinkage creates a flow 31 from the center toward an edge 11p in a vicinity of the surface 21 of the substrate 20. By this weak flow 31, a foreign matter contained in the water drop 11 or fine particles being a deposited solute collect to the edge 11p and deposit in a ring shape.

How dirt in a spot-like shape is left can be understood from FIG. 2. The water drop 10 adhered to a water-repellent surface 22 of the glass substrate 20 shrinks with the progress of moisture evaporation and disappears in the end. On the surface 22 to which water repellency is imparted by a fluorine-containing organic compound, the water drop 10 tends to shrink while keeping a high contact angle with the surface 22. Therefore, inside the water drop 10 shrinking to the smaller water drop 11, a flow 32 from an edge toward a center 11c is created in the vicinity of the surface 22 of the substrate. By this weak flow 32, fine particles contained in the water drop collect to the center 11c and deposit in a spot-like shape.

Unexpectedly, it has been revealed that dirt appearing as a result of evaporation of a water drop is not likely to concentrate on a coating including a given oxide and having a water contact angle of 60° or more and 130° or less. In other words, a tendency of dirt resulting from a water drop to unevenly adhere to a particular part after evaporation of the water drop is reduced on this coating. It has also been confirmed that dirt relatively widely spreading on this coating and adhered thereto is easily removed compared to dirt adhered thereto as a result of concentration. The coating-attached glass article according to the present embodiment reduces uneven distribution of adhered dirt and can have thereby-improved easy-to-clean properties. In the case of a surface to which water repellency is imparted by a fluorine-containing organic compound, spot-like dirt can be left thereon even when the water contact angle thereon is similar to the above. Furthermore, it is easy to wash an adhered organic substance off the coating-attached glass article according to the present embodiment. Other than zirconium oxide, examples of the oxide that can contributes to improvement of the easy-to-clean properties include oxides of rare-earth elements such as yttrium and cerium.

According to studies by the present inventors, the water repellency imparted by zirconium oxide can be 62° or more, 65° or more, 70° or more, or, in some cases, 72° or more as expressed in terms of the water contact angle. The contact angle of such a magnitude can be achieved by means of a surface treatment using a water-repellent agent being an organic substance. The water-repellent agent being an organic substance is commonly decomposed in the process of heating to approximately 300°C. Zirconium oxide, on the other hand, can be stable even when heated to a higher temperature.

In the present embodiment, the contact angle of water on the surface of the coating after exposure of the glass article to a thermal treatment at 760°C for 4 minutes can be 60° or more and 130° or less. The water contact angle after exposure to the thermal treatment can be 62° or more, 65° or more, 70° or more, or, in some cases, 72° or more. However, in the present embodiment, the contact angle of water on the surface of the coating may be measured after a while from the thermal treatment because the contact angle of water on the surface of the coating can decrease temporarily just after the thermal treatment depending on the components of the coating. It takes several tens of days in some cases to recover the contact angle. Therefore, the above contact angle may be measured, for example, after the thermal treatment of the glass article at 760°C for 4 minutes and storage of the glass article in air at ordinary temperature for 40 days.

Hereinafter, the glass substrate and the coating included in the coating-attached glass article of the present embodiment will be described. Subsequently, properties that can be achieved by the present embodiment and applications of the article will be described, and, at the end, manufacturing methods of the present embodiment will be described.

### (Glass substrate)

The type of the glass forming the glass substrate is not particularly limited. The glass substrate may be formed of any of various glasses, such as soda-lime glass, borosilicate glass, aluminosilicate glass, alkali-free glass, and quartz glass. The glass substrate may include SiO₂ as its main component. The glass substrate may include an oxide of an alkaline component (alkali metal element) which is typically sodium or potassium. The size and the shape of the glass substrate are not particularly limited, either. The glass substrate may be a glass sheet, a glass container, a glass lid, a glass tube, a glass bulb, a glass lens, or another formed body. The glass container is, for example, a glass vial, a glass ampoule, or a glass bottle, and may have another shape such as the shape of a tray or a Petri dish. The shape of the glass lid is not particularly limited as long as the glass lid functions as a lid. The glass lid may have a shape, for example, allowing the glass lid to be used as a lid of a cooking device.

The glass substrate may include a dealkalized layer in a surface on the coating side. The inclusion of the dealkalized layer results in reduction of diffusive movement of the alkaline component of the glass from the glass substrate to the coating. In the present embodiment, the dealkalized layer refers to a silica-rich layer formed by a dealkalization reaction in the surface of the glass substrate and subsequent densification.

The glass substrate including the dealkalized layer in the surface on the coating side can be manufactured, for example, by a float process which is a method for continuously manufacturing a glass sheet. In the float process, a glass raw material molten in a float furnace is shaped into a plate-like glass ribbon on a molten metal in a float bath, and the glass ribbon is gradually cooled in an annealing furnace and then cut into a glass sheet having a given size. In the present embodiment, a case of using molten tin as a molten metal will be described. Hereinafter, a surface of a glass sheet is called a bottom surface, the surface being in contact with molten tin in the shaping process in a float bath. The surface opposite the bottom surface is called a top surface, the surface not being in contact with molten tin in the shaping process.

First, at least the bottom surface is subjected to dealkalization. The term "dealkalization" herein means extracting the alkaline component from the glass by bringing an oxidizing gas that reacts with the alkaline component into contact with a surface of the glass sheet. The extracted alkaline component reacts with the oxidizing gas, and consequently a protective film is formed in at least the bottom surface of the glass sheet.

For example, a sulfurous acid gas (SO₂ gas) can be used as the oxidizing gas. The SO₂ reacts with constituent components of the glass to form an alkali sulfate such as sodium sulfate on the glass sheet surface. This alkali sulfate serves as the protective film. The oxidizing gas used herein may be a gas other than a SO₂ gas, the gas being capable of reacting with the alkaline component in the glass to form a protective film. It should be noted that a gas, such as a hydrogen fluoride gas, that can exhibit a strong dealkalization effect is not preferred because the gas does not form a protective film and etches the glass surface to form irregularities on the glass surface. An inert gas such as air, nitrogen, or argon may be used as a carrier gas. The oxidizing gas may further include water vapor.

Subsequently, a portion where the protective film has been formed is densified. Specifically, in place of the alkaline component extracted by the dealkalization, moisture in an atmosphere enters the glass in various forms, such as a proton (H⁺), an oxonium ion (H₃O⁺), and the like, to form a silanol group (Si-OH) in the portion where the protective film has been formed. This silanol group undergoes dehydration condensation to form a siloxane bond (Si-O-Si). In the present embodiment, a state where such dehydration condensation has increased the amount of siloxane bonds is called a "densified" state. The glass sheet surface having an increased amount of siloxane bonds is less likely to be etched. Therefore, measurement of an etching rate reveals the degree of densification.

The dealkalized layer is formed in at least the bottom surface by the above method. The top surface may also be subjected to the treatment for formation of the dealkalized layer. Even when the oxidizing gas is blown against the bottom surface only, a portion of the blown oxidizing gas can go around to the top surface side, treating the top surface to form a dealkalized layer therein.

In the present embodiment, the dealkalized layer in the surface on the coating side of the glass substrate may be a dealkalized layer formed in the bottom surface, or may be a dealkalized layer formed in the top surface. The formation of the dealkalized layer formed in the surface on the coating side of the glass substrate results in reduction of diffusive movement of the alkaline component of the glass from the glass substrate to the coating.

In the case where the portion of the oxidizing gas blown against the bottom surface goes around to the top surface side to form a dealkalized layer also in the top surface, the thickness of the dealkalized layer in the top surface is greater than the thickness of the dealkalized layer in the bottom surface. This is because a tin oxide-diffused layer in a surface layer of the bottom surface reduces the reaction between the SO₂ gas and the constituent components of the glass, reducing formation of the dealkalized layer. In the present embodiment, the dealkalized layer in the surface on the coating side may be the dealkalized layer formed in the top surface. In this case, diffusive movement of the alkaline component of the glass from the glass substrate to the coating is more effectively reduced.

As described above, the glass substrate may be a glass sheet. The glass sheet may have the shape of a flat plate, or may have a curved shape achieved by a bending treatment. The thickness of the glass sheet is not particularly limited, and is, for example, 0.5 mm or more and 12 mm or less. The glass sheet may be treated so as to be suitable for use as window glass of architecture, vehicles, and the like. The glass sheet may be subjected to, for example, a reinforcement treatment. In other words, the glass substrate such as a glass sheet may be formed of a reinforced glass. As the reinforcement treatment are known thermal tempering in which the glass sheet is rapidly cooled after heating to form a compressive stress layer in a surface of the glass sheet and chemical strengthening in which a compressive stress layer is formed in a surface of the glass sheet by ion exchange of alkali metal ions. The glass sheet may be integrated with another glass sheet by a lamination processing and/or a double-glazing processing.

Many of the above treatments of glass sheets involve heating of the glass sheets. For example, the bending treatment of a glass sheet includes a step of softening the glass sheet by heating. In a lamination processing treatment and a double-glazing processing treatment as well as in the reinforcement treatment, glass sheets can be, in some cases, heated to a high temperature depending on the type of a resin film sandwiched by the glass sheets or the type of a sealant used to seal the space between the glass sheets. Easy-to-clean coatings including an organic substance greatly decrease the water repellency and impair the easy-to-clean properties too through heating in such treatments. Because of this, coatings including an organic substance need to be formed after a treatment involving heating of glass sheets. Such a restriction on manufacturing steps can reduce the efficiency in mass production. For example, uniformly applying a coating liquid onto a curved surface is much more difficult than uniformly applying a coating liquid onto a surface of a flat plate. A step of applying a coating liquid onto a flat glass strip before cutting the flat glass strip and processing each of the resulting pieces to have a curved plane can be performed much more efficiently.

Such a water repellency decrease caused by a treatment involving heating can occur for not only glass sheets but also glass substrates in general. On the other hand, according to the present embodiment in which the water repellency is exhibited independent of an organic substance, a water repellency decrease caused by heating can be reduced. Hence, according to a method of the present embodiment, it is possible to subject the glass substrate, after the formation of the coating, to a wide variety of treatments in which the glass substrate having the water-repellent film thereon is heated. In the case of the glass sheet, the wide variety of treatments include, for example, at least one selected from the group consisting of a bending treatment (heat bending treatment), a thermal tempering treatment, a chemical strengthening treatment, a lamination processing treatment, a double-glazing processing treatment, and a film formation treatment which involve heating, and are particularly a heat bending treatment and/or a thermal tempering treatment. That is, in the present embodiment, the glass substrate may be a glass sheet subjected to at least one treatment selected from the group consisting of a heat bending treatment and a thermal tempering treatment. The temperature set in the above thermal treatments is commonly, at most, approximately 760°C.

Conventionally, a glass sheet is subjected to a heat bending treatment and/or a thermal tempering after being cut into a given shape, and then a coating liquid for formation of an easy-to-clean coating is applied to a principal surface of the glass sheet. Therefore, a portion of the coating liquid is attached to an edge face of the glass sheet and the coating is formed also on at least a portion of the edge face. On the other hand, according to the present embodiment, it is possible to form the easy-to-clean coating by applying a coating liquid onto a principal surface of a flat-plate-shaped glass sheet and thereafter subject the glass sheet to at least one treatment selected from the group consisting of a heat bending treatment and a thermal tempering treatment. The glass sheet provided by this embodiment can be a glass sheet having the coating on at least one principal surface of the glass sheet, and not having the coating on an edge face of the glass sheet. According to a conventional method, the resulting coating can be locally thick at the edge face where the coating liquid tends to stay. Therefore, being capable of preventing formation of the coating that is locally thick at the edge face is advantageous, for example, in ensuring a fine product appearance. In addition to such quality improvement, being capable of preventing formation of the coating that is locally thick at the edge face also contributes to reduction in end product cost because a coating treatment can be continuously applied to an uncut glass sheet having a large area.

### (Coating)

The easy-to-clean coating includes zirconium oxide. The zirconium oxide may account for 5 mol% or more, 8 mol% or more, or even 9 mol% or more of the coating. The upper limit of the zirconium oxide content is not particularly limited, and is preferably 90 mol%. When the zirconium oxide content is more than 90 mol%, the adhesion between the glass substrate and the coating is likely to decrease. The coating may include the zirconium oxide as its main component. The coating may be substantially free of a component other than the zirconium oxide. The coating may have a surface on which the zirconium oxide is exposed.

The easy-to-clean coating may further include an inorganic compound other than the zirconium oxide. Examples of the inorganic compound other than the zirconium oxide include oxides of rare-earth elements. The inorganic compound may be other than an oxide, and may be, for example, a nitride, a carbide, or the like.

The easy-to-clean coating may further include an oxide of a rare-earth element. The oxide of the rare-earth element can function as a water-repellent material as the zirconium oxide does. The oxide of the rare-earth element may account for 10 mol% or more, 30 mol% or more, 40 mol% or more, or 50 mol% or more of the coating. The upper limit of the content of the oxide of the rare-earth element is not particularly limited, and is preferably 95 mol%. When the content of the oxide of the rare-earth element is more than 95 mol%, the adhesion between the glass substrate and the coating is likely to decrease. The coating may be a film including the zirconium oxide and the oxide of the rare-earth element as its main components.

The oxide of the rare-earth element may be at least one selected from the group consisting of cerium oxide, lanthanum oxide, and yttrium oxide. The oxide of the rare-earth element can be cerium oxide. The cerium oxide is a preferred material that can impart an appropriate water repellency as the zirconium oxide does. According to studies made by the present inventors using an X-ray diffraction method, a combination of the zirconium oxide and the cerium oxide is suitably employed for the easy-to-clean coating in that the zirconium oxide can collaborate with the cerium oxide without imparting crystals of the cerium oxide. The easy-to-clean coating including the cerium oxide as well as the zirconium oxide is more likely to draw an organic component than the coating including the zirconium oxide alone. This is because cerium oxide is unlikely to form a hydrogen bond with a water molecule due to its unique electron orbital. Additionally, the organic component drawn has an adsorption capacity. Therefore, the presence of the cerium oxide in the easy-to-clean coating is expected to allow the coating to stably exhibit the water repellency and have an easy-to-clean function.

The cerium oxide may account for 10 mol% or more, 30 mol% or more, 40 mol% or more, 50 mol% or more of the coating. The upper limit of the cerium oxide content is not particularly limited, and is preferably 95 mol%. When the cerium oxide content is more than 95 mol%, the adhesion between the glass substrate and the coating is likely to decrease. The coating may be a film including the zirconium oxide and the cerium oxide as its main components. The cerium oxide preferably includes CeO₂, namely, an oxide of tetravalent cerium. CeO₂ is a more desirable component than Ce₂O₃, namely, an oxide of trivalent cerium, in terms of increasing the easy-to-clean properties. However, the coating may include Ce₂O₃ as the cerium oxide. For example, in the case where a compound including trivalent cerium is used as a source of the cerium oxide and a portion thereof is oxidized to tetravalent cerium, the rest of the trivalent cerium is included as Ce₂O₃ in the coating together with CeO₂. Herein, the cerium oxide content in the coating and a ratio and a rate of the cerium oxide in the coating are calculated from all cerium oxide in terms of CeO₂, in other words, assuming that all cerium is present as tetravalent cerium.

In the easy-to-clean coating, a molar ratio (cerium oxide/zirconium oxide) of the cerium oxide to the zirconium oxide is not particularly limited, and may be 0.01 or more, 0.1 or more, 0.5 or more, 0.75 or more, or 1 or more, and may be 50 or less, 30 or less, 20 or less, or 15 or less.

Easy-to-clean coatings on substrates formed of, for example, glass commonly have a multi-layer structure composed of a metal oxide layer serving as a foundation and an overcoat layer formed of an organic compound. The overcoat layer is often formed of a hydrolysis polycondensation product of a hydrolyzable organic silicon compound so as to be firmly bonded to the metal oxide layer serving as an adhesive layer. The hydrolyzable organic silicon compound is an organic compound, typically a fluoroalkyl-containing compound, suitable for improvement of the water repellency. On the other hand, in the present embodiment, the coating may be substantially free of a hydrolysis polycondensation product of the hydrolyzable organic silicon compound. The coating may be substantially free of a fluorine-containing organic compound, particularly a fluoroalkyl-containing compound.

The coating may be a single-layer film or may be a multi-layer film formed of a plurality of layers. The coating being a single-layer film is advantageous in reducing mass production cost. Even when the easy-to-clean coating of the present embodiment is a single-layer film, the easy-to-clean coating can provide the easy-to-clean properties. When the coating of the present embodiment is a multi-layer film, the coating desirably includes a layer including the zirconium oxide as a topmost layer of the multi-layer film.

In other words, in the present embodiment, an underlayer may further be included between the glass substrate and the coating. The inclusion of the underlayer results in reduction of diffusive movement of the alkaline component of the glass from the glass substrate to the coating. The underlayer is, for example, a metal oxide layer. Specifically, the underlayer may be a layer having a lower zirconium oxide content on a mass basis than that in the coating being an outer layer, or may be a layer substantially free of zirconium oxide. The underlayer may include at least one selected from the group consisting of silicon oxide and aluminum oxide. One desirable example of the underlayer is a layer including silicon oxide (SiO₂) as its main component. The underlayer itself may be formed of a plurality of layers.

The underlayer may be amorphous. Since the easy-to-clean coating is crystalline, the alkaline component of the glass is likely to move diffusively from the glass substrate to the coating. However, when the underlayer is amorphous, diffusive movement of the alkaline component of the glass from the glass substrate to the coating is more effectively reduced because of the absence of a grain boundary.

A thickness of the underlayer is, for example, 10 to 400 nm. The thickness of the underlayer may be 10 nm or more, 20 nm or more, or even 30 nm or more, and may be 350 nm or less, 300 nm or less, or even 250 nm or less.

The underlayer may be a layer that can function as a low-emissivity film (Low-E film), an electrically conductive film, a reflection-reducing film, a colored film, or the like.

The Low-E film is, for example, a laminate film including an electrically conductive layer. The Low-E film has, for example, a laminate structure in which a color tone adjustment layer and the electrically conductive layer are stacked in this order from the glass substrate side. The color tone adjustment layer is, for example, a layer including, as its main component, at least one selected from oxides of silicon, aluminum, zinc, and tin. The color tone adjustment layer can be a layer including tin oxide as its main component. The color tone adjustment layer has a thickness of, for example, 25 nm or more and 90 nm or less, particularly 35 nm or more and 70 nm or less. The color tone adjustment layer may be formed of two or more layers having different refractive indices. The two layers having different refractive indices may be, for example, in order from the glass substrate (such as a glass sheet) side, a first color tone adjustment layer including tin oxide as its main component and a second color tone adjustment layer including silicon oxide as its main component. However, the order of stacking the first color tone adjustment layer and the second color tone adjustment layer is not particularly limited. The electrically conductive layer may be, for example, a layer including, as its main component, at least one selected from indium tin oxide (ITO), zinc aluminum oxide, antimony-doped tin oxide (SnO₂:Sb), and fluorine-doped tin oxide (SnO₂:F). The electrically conductive layer can be a layer including fluorine-doped tin oxide (SnO₂:F) as its main component. The electrically conductive layer has a thickness of, for example, 100 nm or more and 350 nm or less, particularly 120 nm or more and 260 nm or less.

The easy-to-clean coating of the present embodiment can achieve a water contact angle of 60° or more, 62° or more, 70° or more, 75° or more, or, in some cases, 80° or more. The upper limit of the water contact angle is not particularly limited, and is, for example, 130° or less, 120° or less, 110° or less, 100° or less, even 95° or less, 90° or less, or particularly 85° or less. The water contact angle can be measured for 4 mg (about 4 µL) of purified water dropped onto the surface of the coating according to the sessile drop method defined in JIS R 3257: 1999.

The easy-to-clean coating of the present embodiment does not completely lose its water repellency even when heated to a high temperature, for example, to 500°C or even 760°C. The coating of the present embodiment can achieve, for example, a water contact angle of 60° or more, 62° or more, 70° or more, 75° or more, or, in some cases, 80° or more, and of 130° or less, 120° or less, 110° or less, 100° or less, even 95° or less, 90° or less, particularly 85° or less, even after exposure of the glass article to the thermal treatment at 760°C for 4 minutes. Both before and after the thermal treatment, the water contact angle may be in a range of any combination of the lower and upper limits described above as examples, such as the range of 62° or more and 85° or less.

Although the details of the reason are unknown, the water repellency of the easy-to-clean coating of the present embodiment can temporarily decrease after the easy-to-clean coating is heated at a high temperature. Moreover, a water repellency value can be unstable shortly after the formation of the film and a low measurement value can be shown then. However, even in such cases, just by storing the coating in air at ordinary temperature, the water contact angle gradually increases and becomes stable, and the contact angle as described above is achieved. According to studies by the present inventors, a period of time required for recovery and stabilization of the contact angle is about 30 to 40 days. Therefore, the contact angle of the coating having undergone a thermal treatment at a high temperature is desirably measured after storage in air at ordinary temperature for a given period of time.

The easy-to-clean coating may include an organic component. The organic component may be an organic compound, or may be an organic group bonded to, for example, an oxide forming the coating. The content of the organic component in the coating is not particularly limited. The content of the organic component in the coating may be 0.01% or more or even 0.1% or more on a mass basis, and may be 10% or less or even 1% or less on a mass basis. The content of the organic component can be relatively large in the coating not exposed to a thermal treatment at a high temperature. However, the coating may be substantially free of the organic component.

A thickness of the easy-to-clean coating is, for example, 2 nm or more and 1000 nm or less, even 5 nm or more and 500 nm or more, particularly 10 nm or more and 300 nm or less. The thickness of the coating may be 15 nm or more or even 20 nm or more, and may be 100 nm or less or even 50 nm or less. When the easy-to-clean coating is too thick, cracking, which causes peeling, is likely to happen. In the case where cracking should be reliably prevented, the thickness of the coating may be 30 nm or less.

The surface of the easy-to-clean coating may be substantially flat.

When the glass substrate is a glass sheet, the easy-to-clean coating may be arranged on only one principal surface of the glass sheet, or may be arranged on both principal surfaces of the glass sheet. However, to prevent a decrease in visible transmittance, the coating is desirably arranged on only one principal surface of the glass sheet.

### (Properties)

The water repellency the glass article of the present embodiment can achieve is as described above. In addition to this, the glass article of the present embodiment can have, for example, the following abrasion resistance. An absolute value of a difference between visible transmittances of the glass article may be 0.7% or less, the visible transmittances being determined before and after an abrasion resistance test performed for the easy-to-clean coating in accordance with an abrasion resistance test in EN 1096-2: 2001 under a condition of 500 strokes (Class A) except that Grade No. 0000 steel wool is used instead of a felt pad.

The absolute value of the difference between the visible transmittances determined for the glass article before and after the above abrasion resistance test in which steel wool is used may be 0.6% or less, 0.5% or less, or even 0.4% or less. The lower limit of the absolute value of the difference between the visible transmittances is not particularly limited, and is, for example, 0.01% or more.

The glass article of the present embodiment can have, for example, the following abrasion resistance. An absolute value of a difference between visible transmittances may be 0.22% or less or even 0.1% or less, the visible transmittances being determined before and after an abrasion resistance test performed for the easy-to-clean coating in accordance with the abrasion resistance test in EN 1096-2: 2001 in which a felt pad is used except that a condition of 10000 strokes is employed instead of the condition of 500 strokes (Class A).

Moreover, the glass article of the present embodiment can have, for example, the following optical properties. A visible transmittance of the glass article may be 65% or more, 70% or more, 80% or more, or even 85% or more. The upper limit of the visible transmittance is not particularly limited, and is, for example, 95%. A haze ratio of the glass article is, for example, 10% or less, and is preferably 5% or less, even 3% or less, or particularly 2% or less. According to the present embodiment, a haze ratio of 1% or less or even 0.5% or less can be achieved.

The preferred ranges of the visible transmittance and the haze ratio are as follows. More preferred ranges thereof are shown in the parentheses.
Visible transmittance: 80% to 95% (85% to 95%)
Haze ratio: 5% or less (4% or less)

### (Applications of article)

The coating-attached glass article according to the present embodiment can be used in various applications, and is particularly suitable for use as a glass article used in an environment in which a water drop adheres thereto. The water drop is commonly supplied from natural water, such as rain or mist, or tap water. The coating-attached glass article according to the present embodiment may be, specifically, an article being at least one selected from the group consisting of glass for architecture, glass for transport vehicles, glass for stores, glass for furniture, glass for home appliances, glass for signage, glass for mobile devices, and glass for solar cells. The coating-attached glass article according to the present embodiment may be an article being at least one selected from the group consisting of window glass, roof glass, glass for bathrooms, mirrors, glass for stores, glass for mobile devices, and glass for solar cells. Examples of the window glass include window glass of architecture and transport vehicles, and examples of the roof glass include the same. The architecture includes not only houses and tall buildings but also greenhouses, arcades, and other constructions fixed on lands. The transport vehicles include vehicles, vessels, and aircrafts. Examples of the vehicles include motor vehicles and railroad cars. Examples of the glass for bathrooms include glass partitions and glass doors of bathrooms. Examples of the mirrors include mirrors in bathrooms and mirrors of bathroom vanities. Examples of the glass for stores include display windows, counters, tables, glass doors of refrigerated cases and freezer cases, and showcases of foods, etc. Examples of the glass for mobile devices include glass covering displays of mobile devices such as smartphones and tablet PCs and, in some case, glass of housings of mobile devices. Examples of the glass for solar cells include cover glasses disposed on the light incident side of solar cells. In particular, when safety of human body needs to be ensured, a reinforced glass is often used in the above applications.

In the above applications, the easy-to-clean coating of the present embodiment may have other functions such as antiglare and antifogging functions as well as the easy-to-clean properties. The easy-to-clean coating of the present embodiment may have at least one function selected from the group consisting of an antiglare function and an antifogging function.

### (Manufacturing method)

Next, methods for manufacturing the glass article of the present embodiment will be described. However, the glass article of the present embodiment may be manufactured by a method other than the following manufacturing methods.

The manufacturing method of the present embodiment includes: applying a coating liquid containing zirconium oxide onto the glass substrate to form a coating film on the glass substrate; and drying the coating film. It should be noted that the zirconium oxide is not necessarily present as a complete oxide as long as zirconium oxide can be supplied to the coating. The zirconium oxide includes a zirconium oxyhydroxide, a zirconium hydroxide, and the like that can supply zirconium oxide after dehydration condensation.

This manufacturing method may further include preparing the coating liquid. The coating liquid may contain a polar solvent, particularly a lower alcohol having 5 or less carbon atoms, as a solvent. The lower alcohol may be methanol and/or ethanol. The step of preparing the coating liquid may include dissolving a zirconium compound in the polar solvent. Hence, the zirconium compound may be a compound soluble in the polar solvent.

The prepared coating liquid is applied onto the glass substrate. The coating liquid is applied, for example, by a known method such as spin coating, bar coating, spray coating, nozzle flow coating, or roll coating.

The manufacturing method of the present embodiment may further include subjecting the coating film to at least one treatment selected from washing and drying.

In the case where the coating liquid contains an oxide of a rare-earth element, such as cerium oxide, together with the zirconium oxide, the manufacturing method of the present embodiment includes: applying a coating liquid containing the zirconium oxide and the cerium oxide onto the glass substrate to form a coating film on the glass substrate; and drying the coating film. The cerium oxide includes CeO₂. It should be noted that the cerium oxide is not necessarily present as a complete oxide as long as cerium oxide can be supplied to the coating. The cerium oxide includes a cerium oxyhydroxide, a cerium hydroxide, and the like that can supply cerium oxide after dehydration condensation.

In this case, the step of preparing the coating liquid may further include hydrolysis of a cerium compound including trivalent cerium. The hydrolyzable cerium compound is preferably a compound soluble in the polar solvent, and, specifically, may be selected from water-soluble cerium compounds. The cerium compound may be, for example, at least one selected from the group consisting of a halogenated cerium and cerium nitrate. The halogenated cerium is, for example, cerium(III) chloride or cerium(III) bromide. The cerium compound is preferably a compound of trivalent cerium, as described above as examples including cerium(III) nitrate. However, the cerium compound is not limited to the compound of trivalent cerium, and may include tetravalent cerium. Oxidation of trivalent cerium to tetravalent cerium requires time in some cases. Therefore, when the coating liquid contains the zirconium oxide and the cerium oxide, the manufacturing method of the present embodiment may further include holding at least one selected from the coating liquid and the coating film in a wet state just for a given period of time. This step can be performed, for example, by holding at least one selected from the prepared coating liquid and the coating film in a wet state at a temperature of 5 to 80°C for 0.5 to 48 hours. This step allows what is called "aging" of the coating liquid or the coating film to take place, increasing the rate of tetravalent cerium. A preferred aging target is the coating liquid. For example, for the coating liquid, a color attributed to tetravalent cerium starts to be observed as conversion to tetravalent cerium progresses. The coating liquid containing only trivalent cerium is colorless if not containing another material that causes coloring. Typically, the coating liquid can be colored a brownish color first and then a yellowish color as more tetravalent cerium is generated. In order to generate a sufficient amount of tetravalent cerium during the period of holding, the pH of the coating liquid is desirably maintained so as not to be too low.

The process of generation of tetravalent cerium can be monitored in absorption spectra from an ultraviolet region to a visible region. For example, an absorption edge of the coating liquid in the ultraviolet region shifts to the long wavelength region side as more tetravalent cerium is generated. When the aging continues until this absorption edge shifts to be in a region of, for example, 350 nm or more, particularly 360 nm or more, a sufficient amount of tetravalent cerium to form the easy-to-clean coating is generated.

The manufacturing method of the present embodiment may further include subjecting the glass substrate to a treatment involving heating after the formation of the easy-to-clean coating on the glass substrate. The treatment involving heating is at least one selected from the group consisting of the above examples, and is particularly a heat bending treatment and/or a thermal tempering treatment. It should be noted that the glass substrate of the present embodiment can be used without these treatments.

The manufacturing method of the present embodiment can also be performed as a method including: applying a coating liquid containing a chelated zirconium ion onto the glass substrate to form a coating film on the glass substrate; and drying the coating film. To chelate a zirconium ion, a common chelating agent such as EDTA or acetylacetone can be used without particular limitations.

When the coating liquid contains the zirconium oxide and the cerium oxide, the manufacturing method of the present embodiment can also be performed as a method including: applying a coating liquid containing a chelated zirconium ion and a chelated cerium ion onto the glass substrate to form a coating film on the glass substrate; and drying the coating film. For the chelation, a common chelating agent such as EDTA or acetylacetone can be used without particular limitations. The cerium ion in the coating liquid may be trivalent cerium. At least a portion of the chelated trivalent cerium ion is likely to be quadruply oxidized in the drying step after the application of the coating liquid and in a heating treatment step.

### (Other manufacturing methods)

The easy-to-clean-coating-attached glass article of the present embodiment is not limited to one manufactured by liquid-phase deposition described above as examples.

### EXAMPLES

Hereinafter, the present invention will be described in more detail with reference to examples. The following examples are not intended to limit the present invention to specific embodiments. Glass sheets were used as glass substrates in the following examples.

### (Thermal treatment before measurement)

Each easy-to-clean-coating-attached glass article was subjected to a thermal treatment before evaluation of the properties. In the thermal treatment, each coating-attached glass sheet was heated in an electric furnace set at 760°C for 4 minutes, taken out of the furnace, wrapped in ceramic wool, and then cooled to room temperature at a cooling rate at which heat cracking does not occur. After the thermal treatment, the coating-attached glass article was left in air at ordinary temperature for at least 7 days. The properties were evaluated thereafter.

### (Water contact angle)

An amount of 4 mg of purified water was dropped onto a surface of each coating, and the water contact angle was measured using a contact angle measurement apparatus (DMs-401 manufactured by Kyowa Interface Science Co., Ltd.) according to the sessile drop method defined in JIS R 3257: 1999.

### (Abrasion resistance)

An abrasion resistance test in which steel wool is used was performed for each easy-to-clean coating in accordance with the abrasion resistance test in EN 1096-2: 2001 except that Grade No. 0000 steel wool was used instead of a felt pad. Specifically, the abrasion resistance test was performed using an abrasion tester (HEIDON Tribostation Type 32 manufactured by SHINTO Scientific Co., Ltd.) by moving, under a 4 N load, the steel wool pressed against a surface of each easy-to-clean coating 500 strokes (Class A). The steel wool was attached to a head of the abrasion tester. The dimensions of a portion of the head were 20 × 20 mm, the portion being brought into contact with the coating to be tested. The steel wool (TSW0000-200 manufactured by TRUSCO NAKAYAMA CORPORATION) attached to the head had dimensions of 140 mm in length × 270 mm in width and a thickness of 75 mm. The amount of the steel wool was about 0.2 g when the steel wool was a piece having dimensions of 20 × 20 mm and a thickness of 75 mm. The abrasion tester was set so that the head would travel a 100 mm distance each way at 6000 mm/min.

Incidentally, an abrasion resistance test in which a felt pad is used was also performed for each easy-to-clean coating. This abrasion resistance test was performed in accordance with the abrasion resistance test in EN 1096-2: 2001, except that a condition of 10000 strokes was employed instead of the condition of 500 strokes (Class A). Specifically, the abrasion resistance test was performed using an abrasion tester (HEIDON Tribostation Type 32 manufactured by SHINTO Scientific Co., Ltd.) by moving, under a 4 N load, the felt pad pressed against a surface of each easy-to-clean coating 10000 strokes. The felt pad was attached to a head of the abrasion tester. A portion of the head had a diameter of 15 mm, the portion being brought into contact with the coating to be tested. The felt pad had a density of 0.5 g/cm³. The abrasion tester was set so that the head would travel a 100 mm distance each way at 6000 mm/min.

A visible transmittance was measured by the following method before and after the abrasion resistance test, and the difference between the visible transmittances was calculated. The difference was determined by subtracting the measured value before the abrasion resistance test from the measured value after the abrasion resistance test.

### (Optical properties)

The visible transmittance was determined from a visible-ultraviolet absorption spectrum measured using a spectrophotometer (330 manufactured by Hitachi, Ltd.). The haze ratio was measured using a haze meter (HZ-V3 manufactured by Suga Test Instruments Co., Ltd.).

### (Thickness)

The thickness of each easy-to-clean coating was measured by SEM observation of a cross-section. For the glass article including an underlayer (SiO₂ layer), the thickness of the underlayer was also measured by SEM observation of a cross-section.

### (Dirt adhesion test)

Tap water was sprayed on the coating surface of each coating-attached glass article in such a position that a principal surface of the coating-attached glass article faced a vertical direction. Next, the coating-attached glass article was held at room temperature for 10 minutes to evaporate water drops adhered on the coating surface. After that, light from an LED light source was incident on an edge face of the glass article, and the coating surface was observed.

### <Example 1>

In 267.0 g of a solvent mixture (Fineeter A-10 manufactured by FUTABA PURE CHEMICAL CO., LTD.) containing ethanol as a main solvent were dissolved 3.33 g of cerium(III) nitrate hexahydrate (Ce(NO₃)₃•6H₂O) (manufactured by FUJIFILM Wako Pure Chemical Corporation; 98%), 2.48 g of diacetoxyzirconium(IV) oxide (C₄H₆O₅Zr) (manufactured by Tokyo Chemical Industry Co., Ltd.; 20%), 67.2 g of acetylacetone, and 60 g of propylene glycol to obtain a coating liquid. In the coating liquid, a molar ratio between CeO₂ and ZrO₂ was 3.5:1. Subsequently, the coating liquid was aged under stirring at 40°C for 15 hours or more. The aged coating liquid was light yellow.

A highly-transmissive glass (Optiwhite (registered trademark) manufactured by Nippon Sheet Glass Co., Ltd.; thickness: 3 mm; hereinafter referred to as "OPW") was used as a glass substrate. The glass sheet was cut into a 10 cm square piece, which was washed and dried. The aged coating liquid was applied to the glass sheet by spraying. The coating-attached glass article was subjected to the above drying treatment. The coating-attached glass article having undergone the drying treatment was subjected to the above thermal treatment. A coating-attached glass article of Example 1 was obtained in this manner.

### <Example 2>

A glass in which a silicon oxide (SiO₂) layer was arranged (OptiShower manufactured by Pilkington Group Limited; thickness of SiO₂ layer: 15 nm; hereinafter referred to as "OPS") was used as a glass substrate, and a coating was formed on the SiO₂ layer. A coating-attached glass article of Example 2 was obtained in the same manner as in Example 1, except for these points.

### <Example 3>

A component ratio in the coating liquid was adjusted such that the molar ratio between CeO₂ and ZrO₂ was 6:1 in the coating liquid. OPS was used as a glass substrate, and a coating was formed on the SiO₂ layer. A coating-attached glass article of Example 3 was obtained in the same manner as in Example 1, except for these points.

### <Example 4>

The component ratio in the coating liquid was adjusted such that the molar ratio between CeO₂ and ZrO₂ was 9.3:1 in the coating liquid. OPS was used as a glass substrate, and a coating was formed on the SiO₂ layer. A coating-attached glass article of Example 4 was obtained in the same manner as in Example 1, except for these points.

### <Example 5>

The component ratio in the coating liquid was adjusted such that the molar ratio between CeO₂ and ZrO₂ was 1:1 in the coating liquid. OPS was used as a glass substrate, and a coating was formed on the SiO₂ layer. A coating-attached glass article of Example 5 was obtained in the same manner as in Example 1, except for these points.

### <Example 6>

The component ratio in the coating liquid was adjusted such that the molar ratio between CeO₂ and ZrO₂ was 0:1 in the coating liquid. That is, a coating liquid of Example 6 was substantially free of CeO₂. OPS was used as a glass substrate, and a coating was formed on the SiO₂ layer. A coating-attached glass article of Example 6 was obtained in the same manner as in Example 1, except for these points.

### <Comparative Example 1>

The component ratio in the coating liquid was adjusted such that the molar ratio between CeO₂ and ZrO₂ was 1:0 in the coating liquid. That is, a coating liquid of Comparative Example 1 was substantially free of ZrO₂. A coating-attached glass article of Comparative Example 1 was obtained in the same manner as in Example 1, except for this point.

### <Comparative Example 2>

The component ratio in the coating liquid was adjusted such that the molar ratio between CeO₂ and ZrO₂ was 1:0 in the coating liquid. That is, a coating liquid of Comparative Example 2 was substantially free of ZrO₂. OPS was used as a glass substrate, and a coating was formed on the SiO₂ layer. A coating-attached glass article of Comparative Example 2 was obtained in the same manner as in Example 1, except for these points.

The water contact angle, the visible transmittance, and the like were measured by the above methods for each of Examples and Comparative Examples. FIG. 1 shows the results. Table 1 also shows measurement values of Reference Examples 1 and 2 in which no coating was arranged on a surface of a glass substrate.

**[Table 1]**

| | Glass substrate | CeO₂:ZrO₂ (molar ratio) | | Coating thickness (nm) | Underlayer thickness (nm) | Contact angle (°) | Visible transmittance (%) | Haze ratio (%) | Difference between visible transmittances before and after steel wool abrasion resistance test (500 strokes) |
|---|---|---|---|---|---|---|---|---|---|
| Example 1 | OPW | 3.5 | 1 | 20 | - | 72.7 | 88.2 | 0.13 | 0.14 |
| Example 2 | OPS | 3.5 | 1 | 20 | 15 | 82.6 | 89.4 | 0.05 | 0.30 |
| Example 3 | OPS | 6 | 1 | 20 | 15 | 62.9 | 88.8 | 0.04 | -0.12 |
| Example 4 | OPS | 9.3 | 1 | 20 | 15 | 72.5 | 88.7 | 0.04 | 0.07 |
| Example 5 | OPS | 1 | 1 | 20 | 15 | 74.6 | 88.2 | 0.08 | -0.26 |
| Example 6 | OPS | 0 | 1 | 20 | 15 | 79.9 | 88.3 | 0.06 | 0.02 |
| Comparative Example 1 | OPW | 1 | 0 | 20 | - | 69.1 | 90.2 | 0.11 | 1.46 |
| Comparative Example 2 | OPS | 1 | 0 | 20 | 15 | 77.1 | 89.8 | 0.03 | 0.89 |
| Reference Example1 | OPW | 0 | 0 | - | - | 14.3 | 91.6 | 0.09 | -0.04 |
| Reference Example 2 | OPS | 0 | 0 | - | 15 | 12.8 | 91 | 0.06 | -0.22 |

According to the results of the abrasion resistance test in which steel wool is used, the absolute value of the difference between the visible transmittances is 0.7% or less in Examples. On the other hand, in Comparative Examples, the absolute value of the difference between the visible transmittances is more than 0.7%. The difference between the visible transmittances is a positive value in each Comparative Example because at least a portion of the coating peeled off after the abrasion resistance test and the visible transmittance increased. Also in the abrasion resistance test in which a felt pad is used, the absolute value of the difference between the visible transmittances in Example is 0.22% or less, which is lower than the absolute values (more than 0.22%) in Comparative Examples. Individual data of this test is omitted.

Moreover, in Examples 1 to 6, the contact angle of water on the coating after the thermal treatment is 60° or more and 130° or less. According to the results of the dirt adhesion test, marks on portions to which the water drops adhered were less noticeable in Examples 1 to 6 and Comparative Examples 1 and 2 than in Reference Examples 1 and 2. This reflects the water contact angle higher than those of the glass surfaces. In Reference Examples 1 and 2, since no coatings were arranged, water was easily adhered to the surfaces, marks on portions to which the water drops adhered or traces of water flow were present over a wide area, and the glass substrates had whitish appearances.

It can be understood by comparing Examples 1 and 2 that the water contact angle is improved more in the case where the glass substrate in which the SiO₂ layer is arranged as an underlayer than in the case where the coating is arranged directly on the surface of the glass substrate. This is presumably because the amorphous SiO₂ layer reduced diffusive movement of an alkaline component of the glass from the glass substrate to the coating. Unlike conventional easy-to-clean coatings formed by applying a fluorine-containing organic compound, the coating according to the present embodiment can have a good abrasion resistance without an adhesion promoter layer under the coating (Example 1). In the coating according to the present embodiment, the underlayer serves not as an adhesion promoter layer but as a diffusion prevention layer. This diffusion prevention layer can prevent the alkaline component diffused out of the glass substrate in the thermal treatment from entering the coating and can contribute to maintenance of the water repellency of the surface (Example 2).

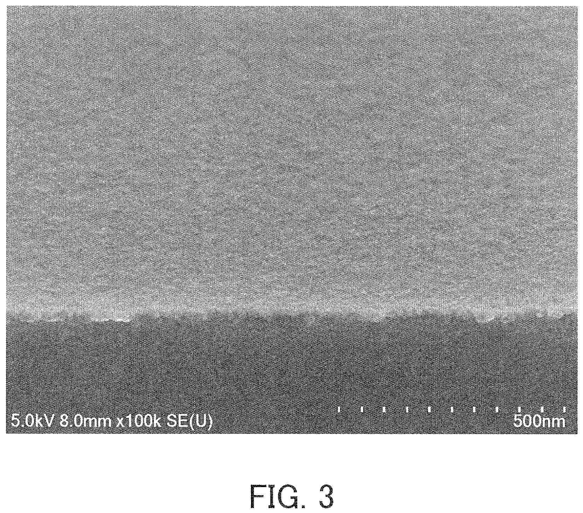

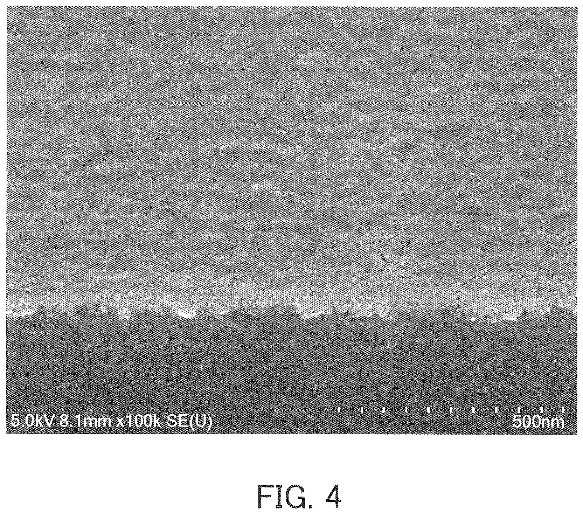

The surfaces of the coatings of Example 1 and Comparative Example 1 were observed using a SEM after the above thermal treatment. FIG. 3 (Example 1) and FIG. 4 (Comparative Example 1) show the results. No crack was confirmed on the surface of the coating of Example 1. On the other hand, cracking had occurred in the surface of the coating of Comparative Example 1. The surfaces of the coatings of Examples were observed in the same manner; the surfaces were each substantially flat and no crack was confirmed therein.

## Claims

1. A coating-attached glass article, comprising:
a glass substrate; and
an easy-to-clean coating on the glass substrate, wherein
the coating includes zirconium oxide, and
a contact angle of water on a surface of the coating is 60° or more and 130° or less.

2. The coating-attached glass article according to claim 1, wherein an absolute value of a difference between visible transmittances is 0.7% or less, the visible transmittances being determined before and after an abrasion resistance test performed for the coating in accordance with an abrasion resistance test in EN 1096-2: 2001 under a condition of 500 strokes except that Grade No. 0000 steel wool is used instead of a felt pad.

3. The coating-attached glass article according to claim 1 or 2, wherein the coating further includes an oxide of a rare-earth element.

4. The coating-attached glass article according to claim 3, wherein a content of the oxide of the rare-earth element is 10 mol% or more in the coating.

5. The coating-attached glass article according to any one of claims 1 to 4, wherein the contact angle after exposure of the coating-attached glass article to a thermal treatment at 760°C for 4 minutes is 60° or more and 130° or less.

6. The coating-attached glass article according to any one of claims 1 to 5, wherein the zirconium oxide accounts for 5 mol% or more in the coating.

7. The coating-attached glass article according to any one of claims 1 to 6, further comprising an underlayer between the glass substrate and the coating.

8. The coating-attached glass article according to claim 7, wherein a thickness of the underlayer is 10 to 400 nm.

9. The coating-attached glass article according to claim 8, wherein the underlayer includes SiO₂ as a main component.

10. The coating-attached glass article according to claim 8 or 9, wherein the underlayer is amorphous.

11. The coating-attached glass article according to any one of claims 1 to 6, wherein the glass substrate includes a dealkalized layer in a surface on the coating side.

12. The coating-attached glass article according to any one of claims 1 to 11, wherein the glass substrate is formed of a reinforced glass.

13. The coating-attached glass article according to any one of claims 1 to 12, being at least one selected from the group consisting of glass for architecture, glass for transport vehicles, glass for stores, glass for furniture, glass for home appliances, glass for signages, glass for mobile devices, and glass for solar cells.

14. The coating-attached glass article according to any one of claims 1 to 13, wherein the coating has at least one function selected from the group consisting of an antiglare function and an antifogging function.

15. The coating-attached glass article according to any one of claims 1 to 14, wherein the coating is substantially free of a fluoroalkyl-containing compound.

16. The coating-attached glass article according to any one of claims 1 to 15, wherein the coating is a single-layer film.

17. The coating-attached glass article according to any one of claims 1 to 16, wherein a thickness of the coating is 10 nm or more and 300 nm or less.
